# EUROPEAN PATENT APPLICATION

(11) **EP 1 975 760 A2**
(43) Date of publication of application: **01.10.2008**
(21) Application number: 08102908.4
(22) Date of filing: 26.03.2008
(51) Int. Cl.: G05G 1/30, F16H 59/20

(54) **Accelerator pedal device**

(30) Priority: 27.03.2007 JP 2007080728
(71) Applicant: MIKUNI CORPORATION, Chiyoda-ku, Tokyo (JP)
(72) Inventor: Ogura, Takahiro, Odawara-shi Kanagawa (JP)
(74) Representative: Betten & Resch

(57) **Abstract**

Accelerator pedal device having a housing (10,20) that supports a pedal arm (30) to be free to oscillate, a return spring (40,53) for returning the pedal arm to a resting position, and a kickdown mechanism for generating a kickdown load that increases a pedal force of an accelerator pedal, a slider (51) that moves in conjunction with the pedal arm and has a convex portion (51f) and a guide surface (14a) formed in the housing (10) in order to guide the slider slidably are employed as the kickdown mechanism. The convex portion (51f) of the slider (51) is separated from the guide surface (14a) up to a point immediately prior to generation of the kickdown load, and lifted onto the guide surface 14a when the kickdown load is generated. Thus, the kickdown mechanism can be simplified.

## Description

### [Technical Field]

The present invention relates to an accelerator pedal device that is applied to a vehicle or the like employing a drive-by-wire system, and more particularly to an accelerator pedal device comprising a hysteresis generating mechanism and a kickdown mechanism for generating hysteresis in a pedal force .

### [Background Art]

In an engine installed in an automobile or the like, a well-known accelerator pedal device applied to an electronic control throttle system (a drive-by-wire system) comprises a pedal arm provided integrally with an accelerator pedal and supported to be free to oscillate relative to a housing, a spindle for supporting the pedal arm to be free to oscillate, a return spring for returning the pedal arm to a resting position, a hysteresis lever for generating hysteresis in a pedal force (pedal load), which is biased by the return spring and disposed so as to slide about the spindle together with a liner of the pedal arm, a position sensor for detecting an angular position of the pedal arm, a kickdown mechanism that generates a kickdown load for increasing the pedal force rapidly when the accelerator pedal is depressed to a maximum, and so on (see Patent Document 1, for example).
In this device, the kickdown mechanism comprises a plunger that is supported to be free to reciprocate relative to the housing and is capable of contacting the pedal arm so as to be pushed inward by the pedal arm, a return spring (biasing spring) for returning the plunger to a projecting orientation, a plate spring for biasing a roller such that the roller enters a recessed portion formed in a back end of the plunger, and so on. When the pedal arm is depressed such that the plunger is pushed, causing the roller to withdraw from the recessed portion, the kickdown mechanism generates a click load, and as a result, a kickdown load is generated.

However, in this kickdown mechanism, dedicated components such as the plunger, the return spring (biasing spring), the plate spring comprising the roller, and so on are required, leading to an increase in the number of assembly steps, an increase in manufacturing costs, and so on. Furthermore, since the plunger is exposed to the exterior of the housing, dust, sand and so on may enter the plunger or become adhered thereto, causing scoring, and as a result, the plunger, or in other words the kickdown mechanism, may malfunction. Furthermore, when the biasing force of the plate spring following generation of the click load is applied to the pedal force, when the biasing force varies over time, and so on, the hysteresis characteristic of the pedal force may be affected. Moreover, a part of the pedal arm must contact the plunger, and therefore the shape of the pedal arm is restricted, leading to a reduction in design freedom.

Another well-known accelerator pedal device comprises a pedal arm having an integral accelerator pedal and supported to be free to oscillate relative to a housing, a spindle for supporting the pedal arm to be free to oscillate, a return spring for returning the pedal arm to a resting position, a position sensor for detecting an angular position of the pedal arm, a kickdown mechanism that applies a reactive force (a kickdown load) to the pedal arm when the accelerator pedal is depressed to a maximum, and so on (see Patent Document 2, for example).
In this device, the kickdown mechanism comprises a case fixed to the interior of the housing, a plunger that is supported to be free to reciprocate relative to the case and is capable of contacting the pedal arm so as to be pushed by the pedal arm, a pin that engages with a recessed portion formed in an outer periphery of the plunger and a biasing spring for biasing the pin, a return spring (biasing spring) for returning the plunger to a projecting orientation, an adjustment bolt for adjusting a stopping position of the plunger, and so on. When the pedal arm is depressed such that the plunger is pushed, causing the pin to withdraw from the recessed portion, the kickdown mechanism generates a click load, and as a result, a kickdown load is generated.

However, in this kickdown mechanism, similarly to the kickdown mechanism described above, dedicated components such as the case, the plunger, the pin and return spring (biasing spring), and so on are required, leading to an increase in the number of assembly steps, an increase in manufacturing costs, and so on. Moreover, a part of the pedal arm must contact the plunger, similarly to the kickdown mechanism described above, and therefore the shape of the pedal arm is restricted, leading to a reduction in design freedom.

[Patent Document 1] Japanese Unexamined Patent Application Publication 2002-283871
[Patent Document 2] Japanese Unexamined Patent Application Publication 2005-126022

### [Disclosure of the Invention]

### [Problems to be Solved by the Invention]

The present invention has been designed in consideration of the circumstances described above, and it is an object thereof to provide an accelerator pedal device that can generate a kickdown load (click load) when an accelerator pedal (pedal arm) is depressed to a fully open side, while achieving structural simplification, reductions in the number of components, the number of assembly steps, cost, and so on, and also an improvement in design freedom.

### [Means for Solving the Problems]

An accelerator pedal device according to the present invention comprises a pedal arm having an accelerator pedal, a housing for supporting the pedal arm to be free to oscillate about a predetermined oscillation axis, a return spring for returning the pedal arm to a resting position, and a kickdown mechanism for generating a kickdown load that increases a pedal force of the accelerator pedal. The kickdown mechanism includes a slider that moves in conjunction with the pedal arm, and a guide surface that is formed in the housing to guide the slider slidably, and the slider comprises a convex portion that is separated from the guide surface up to a point immediately prior to generation of the kickdown load and lifted onto the guide surface when the kickdown load is generated.
According to this constitution, when the accelerator pedal is depressed against the biasing force of the return spring, the slider moves in conjunction with the pedal arm so as to slide over the guide surface of the housing, and when the accelerator pedal approaches a maximum depression position, the convex portion of the slider is lifted onto the guide surface, whereby the kickdown load (click load) is generated. As a result, the pedal force increases rapidly, and therefore the operator is able to recognize (sense) the kickdown operation clearly.
By forming the kickdown mechanism from the slider having the convex portion and the guide surface of the housing in this manner, the slider is essentially the only required component, and therefore structural simplification, reductions in the number of components, the number of assembly steps, cost, and so on can be achieved. Moreover, by adjusting the shape, projection position, and projection amount of the convex portion appropriately, the kickdown load and the generation point thereof can be modified easily without replacing the entire kickdown mechanism, as is necessary in a conventional device.

Further, an accelerator pedal device according to the present invention comprises a pedal arm having an accelerator pedal, a housing for supporting the pedal arm to be free to oscillate about a predetermined oscillation axis, a return spring for returning the pedal arm to a resting position, and a kickdown mechanism for generating a kickdown load that increases a pedal force of the accelerator pedal. The kickdown mechanism includes a slider that moves in conjunction with the pedal arm, and a guide surface that is formed in the housing to guide the slider slidably, and the guide surface comprises a convex portion that is separated from the slider up to a point immediately prior to generation of the kickdown load and contacted by the slider such that the slider is lifted thereon when the kickdown load is generated.
According to this constitution, when the accelerator pedal is depressed against the biasing force of the return spring, the slider moves in conjunction with the pedal arm so as to slide over the guide surface of the housing, and when the accelerator pedal approaches a maximum depression position, the slider is lifted onto the convex portion formed on the guide surface, whereby the kickdown load (click load) is generated. As a result, the pedal force increases rapidly, and therefore the operator is able to recognize (sense) the kickdown operation clearly.
By forming the kickdown mechanism from the slider and the guide surface and convex portion of the housing in this manner, the slider is essentially the only required component, and therefore structural simplification, reductions in the number of components, the number of assembly steps, cost, and so on can be achieved. Moreover, by adjusting the shape, projection position, and projection amount of the convex portion appropriately, the kickdown load and the generation point thereof can be modified easily without replacing the entire kickdown mechanism, as is necessary in a conventional device.

In the constitution described above, a constitution whereby a hysteresis generating mechanism for generating hysteresis in the pedal force of the accelerator pedal, having a slider that slides over the guide surface of the housing in conjunction with the pedal arm so as to generate a frictional force, and a biasing spring for biasing the slider toward the resting position, is further provided, and the slider of the hysteresis generating mechanism doubles as the slider of the kickdown mechanism, may be employed.
According to this constitution, the slider provided in the pre-existing hysteresis generating mechanism doubles as the slider of the kickdown mechanism, and therefore the need to provide a dedicated component for the kickdown mechanism is eliminated, enabling further structural simplification and further reductions in the number of components and cost. Moreover, when the accelerator pedal device comprises the hysteresis generating mechanism, the kickdown mechanism can be provided without varying the outward appearance of the housing or modifying the pedal arm. Furthermore, since the pedal arm is not subject to restrictions such as those occurring when a conventional kickdown mechanism is provided, the pedal arm can be designed freely.

In the constitution described above, a constitution whereby the biasing spring doubles as the return spring may be employed.
According to this constitution, the number of springs can be reduced, enabling further structural simplification and further reductions in the number of components, the number of assembly steps, cost, and so on.

In the constitution described above, a constitution whereby the slider comprises a sliding surface that slides over the guide surface and the convex portion, which is formed so as to project from the sliding surface, and the housing comprises a recessed portion or a notch portion that is formed adjacent to the guide surface and receives the convex portion up to the point immediately prior to generation of the kickdown load, may be employed.
According to this constitution, when the kickdown load has not been generated, the convex portion of the slider is received by (faces) the recessed portion or notch portion of the housing, and when the sliding surface of the slider slides over the guide surface of the housing in conjunction with the pedal arm (when the accelerator pedal is depressed) such that the kickdown load is generated, the convex portion withdraws from the recessed portion or notch portion and is lifted onto the guide surface.
By having the slider define the sliding surface and the convex portion and having the housing define the guide surface and the recessed portion or notch portion in this manner, the kickdown mechanism can be structured even more simply, and moreover, the slider can be caused to slide in a predetermined direction such that the kickdown load is generated at a desired timing.

In the constitution described above, a constitution whereby the pedal arm comprises an arm that extends on an opposite side of the oscillation axis to the accelerator pedal, and an engaging portion that is provided on a tip end of the arm and engages with the slider, the housing comprises a notch portion that allows the arm to pass therethrough as the arm oscillates, and the notch portion is formed to receive the convex portion of the slider up to the point immediately prior to generation of the kickdown load, may be employed.
According to this constitution, the arm of the pedal arm, which extends on the opposite side of the oscillation axis (the upper side, for example) to the side on which the accelerator pedal is provided, passes through the notch portion of the housing, and the engaging portion of the pedal arm, which is positioned on the tip end of the arm, engages with the slider, and as a result, the slider slides in conjunction with the oscillation operation of the pedal arm. Then, when the convex portion of the slider withdraws from the notch portion and is lifted onto the guide surface, the kickdown load (click load) is generated.
By having the notch portion function both to allow the pedal arm to oscillate and to receive the convex portion of the slider in this manner, component consolidation can be achieved, enabling structural simplification, a reduction in the size of the device, and so on.

In the constitution described above, a constitution whereby the notch portion defines an edge portion formed such that when the kickdown load is generated, the convex portion comes into contact therewith and is lifted onto the guide surface, may be employed.
According to this constitution, a kickdown load that increases rapidly relative to the pedal forceⁱ can be generated at the timing when the convex portion of the slider contacts the edge portion of the notch portion and is lifted onto the guide surface. As a result, the operator can sense a clicking sensation clearly, and therefore the kickdown operation can be recognized reliably. Furthermore, by modifying the position of the edge portion, the generation timing (generation point) of the kickdown load can be adjusted appropriately in accordance with the individual requirements of the vehicle model in which the accelerator pedal device is installed.

In the constitution described above, a constitution whereby the housing and the slider are respectively formed from a resin material may be employed.
According to this constitution, by selecting a resin material exhibiting high corrosion resistance and shock resistance appropriately, a kickdown mechanism exhibiting superior functional reliability can be obtained while achieving reductions in the overall weight and cost of the device.

### [Effects of the Invention]

According to the accelerator pedal device having the constitution described above, an accelerator pedal device that can generate a clearly recognizable kickdown load (click load) when an accelerator pedal (pedal arm) is depressed to a fully open side can be obtained while achieving structural simplification, reductions in the number of components, the number of assembly steps, cost, and so on, and also an improvement in design freedom.

### [Best Modes for Carrying Out the Invention]

An embodiment of the present invention will be described below with reference to the attached drawings.

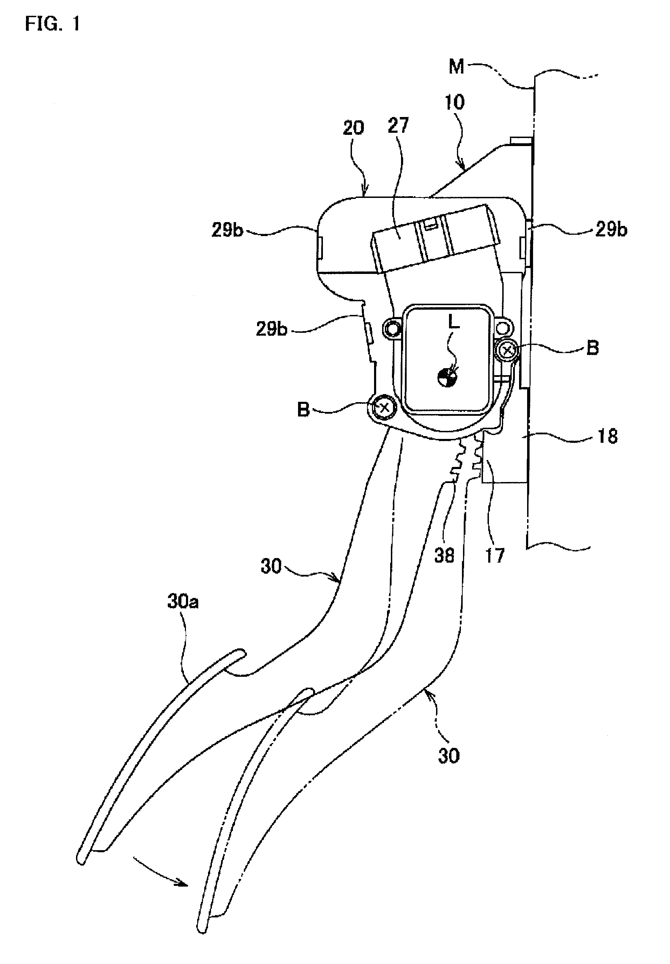

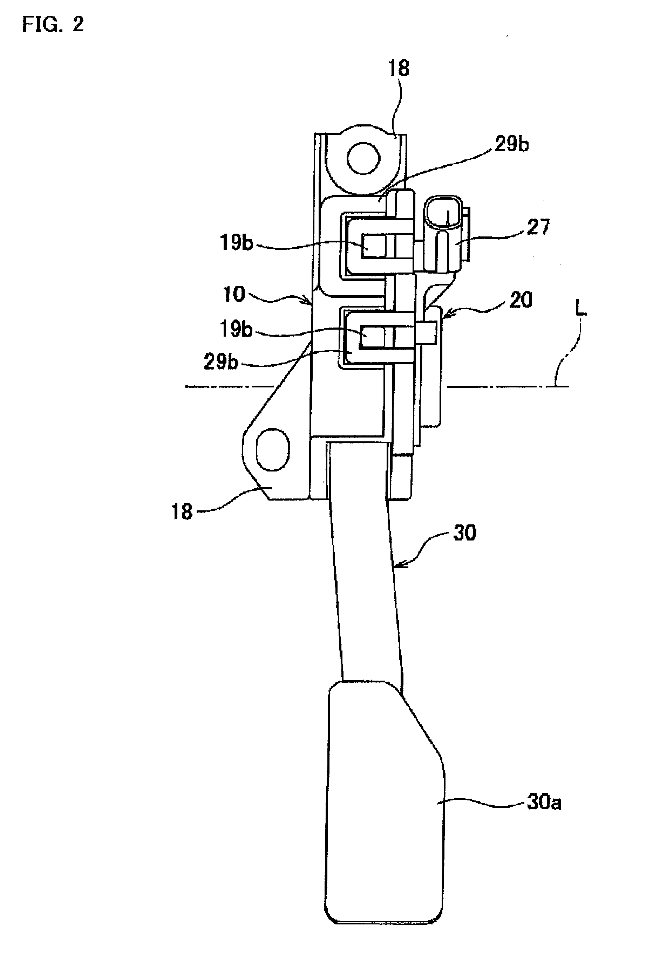

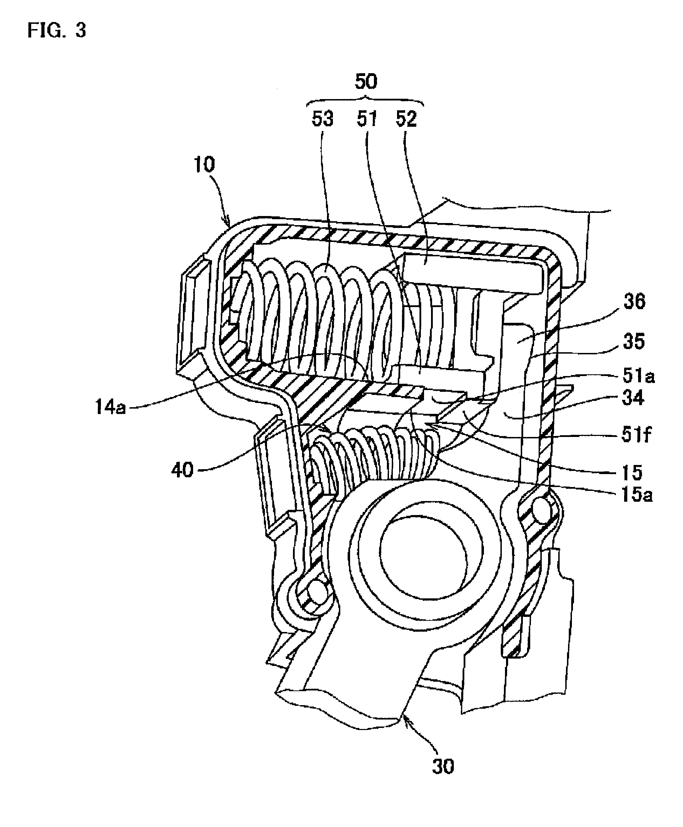

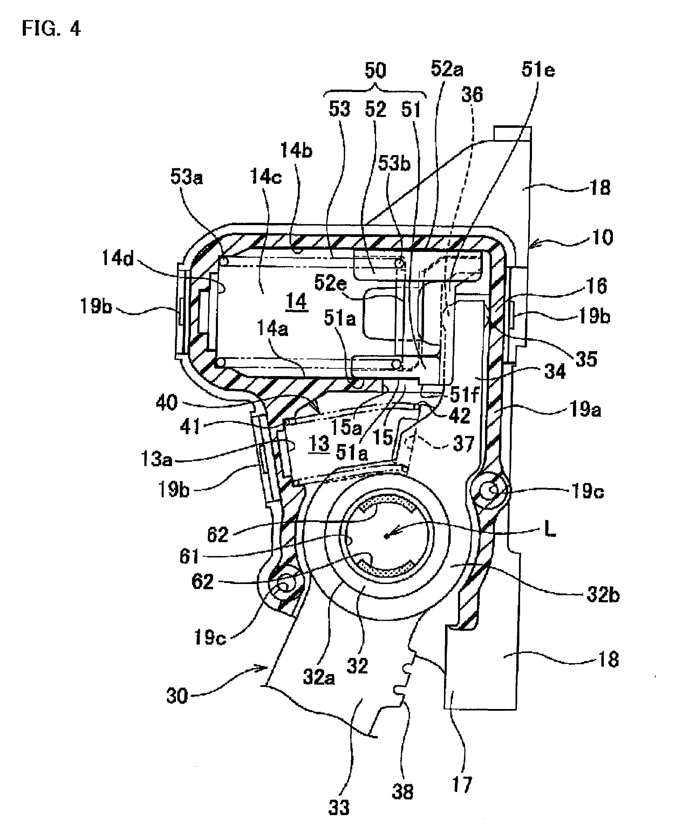

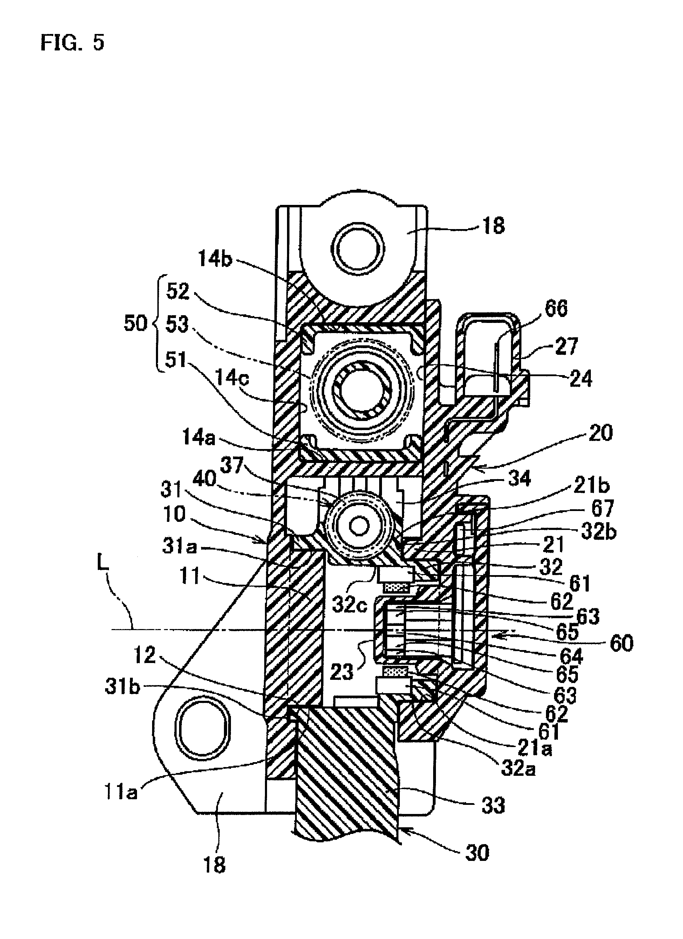

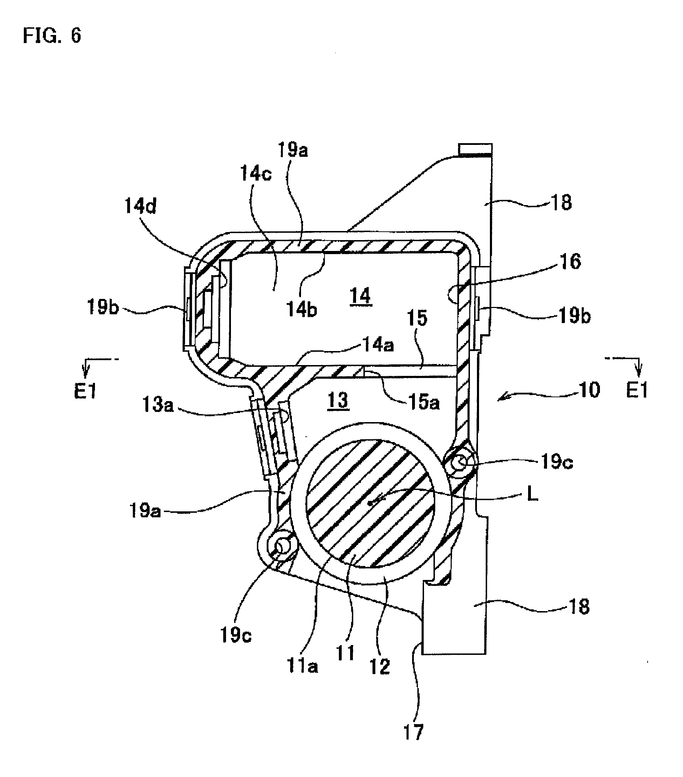

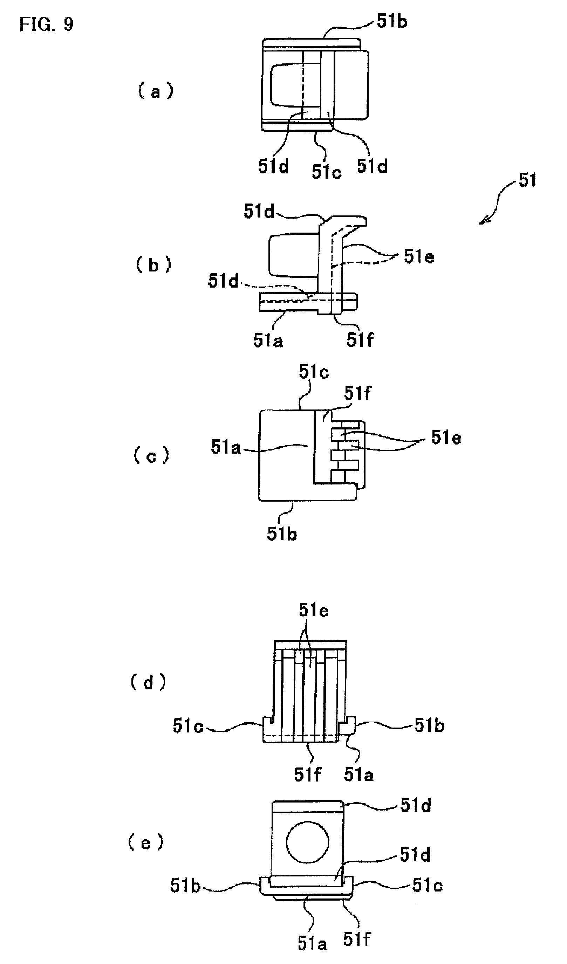

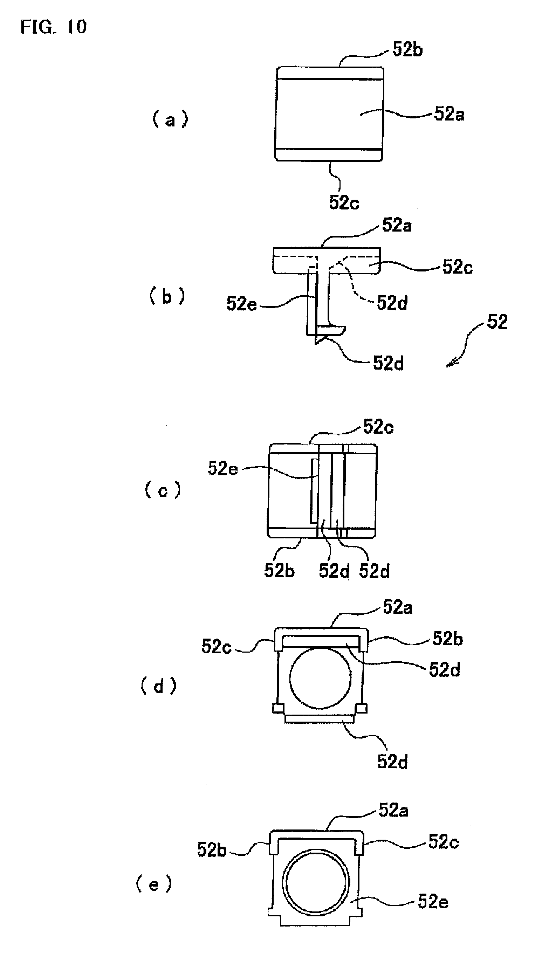

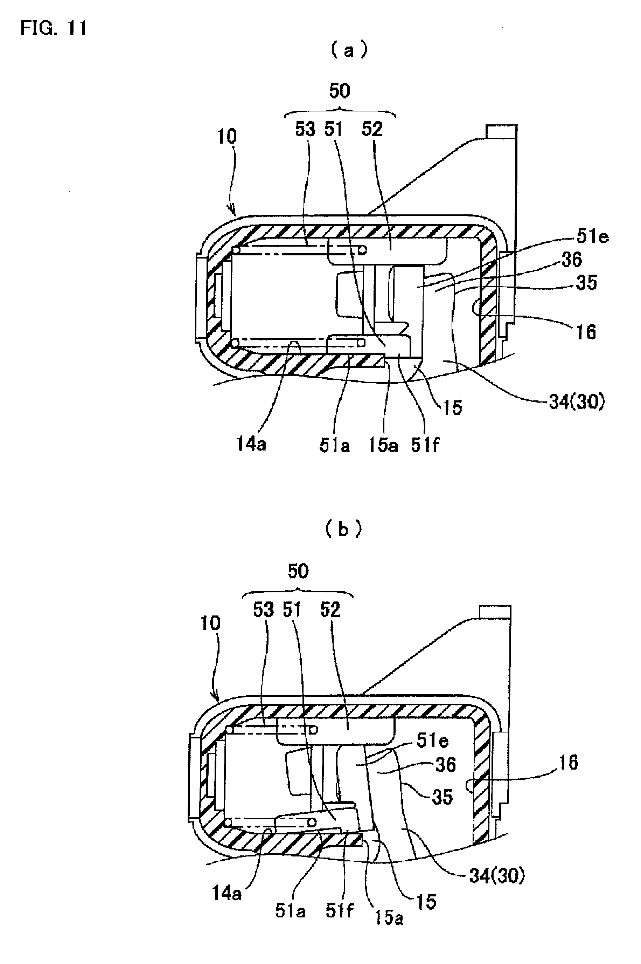

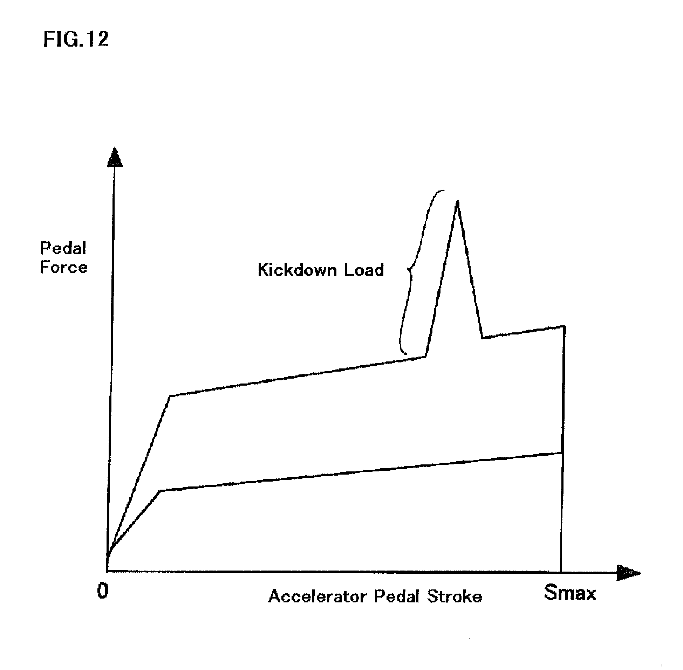

Figs. 1 through 12 show an embodiment of an accelerator pedal device according to the present invention. Fig. 1 is a side view of the device, Fig. 2 is a front view of the device, Fig. 3 is a perspective view showing the interior of the device, Fig. 4 is a side view showing the interior of the device, Fig. 5 is a sectional view showing the interior of the device, Figs. 6 through 8 are side views and sectional views showing the interior of a housing forming a part of the device, Figs. 9 and 10 are component diagrams illustrating the constitution of a hysteresis generating mechanism included in the device, Fig. 11 is an operational diagram illustrating an operation of a kickdown mechanism included in the device, and Fig. 12 is a pedal force characteristic diagram showing a pedal force and a kickdown load in the device.

As shown in Figs. 1 through 5, this accelerator pedal device comprises a housing main body 10 and a housing cover 20, which together serve as a housing fixed to a vehicle body M of an automobile or the like, a pedal arm 30 that has an accelerator pedal 30a and is supported by the housing (the housing main body 10 and housing cover 20) so as to be free to oscillate about a prescribed, predetermined oscillation axis L, a return spring 40 for returning the pedal arm 30 to a resting position, a hysteresis generating mechanism 50 constituted by a first slider 51, a second slider 52, and a return spring 53 serving as a biasing spring, for generating hysteresis in a pedal force (pedal load), a kickdown mechanism formed from a part (the first slider 51) of the hysteresis generating mechanism 50 and a part (a lower portion guide surface 14a of the housing main body 10, to be described below) of the housing, for generating a kickdown load in order to increase the pedal force, a position sensor 60 for detecting a rotary angle position of the pedal arm 30, and so on.

The housing main body 10 is formed entirely from a resin material, and as shown in Figs. 3 through 6, comprises a convex fitting portion 11 that is fitted (internally fitted) slidingly to a cylindrical portion 31 of the pedal arm 30, to be described below, a thrust receiving portion 12 for supporting the cylindrical portion 31 in the direction of the oscillation axis L, a recessed portion 13 for accommodating the return spring 40, a recessed portion 14 for accommodating the hysteresis generating mechanism 50, a notch portion 15 through which an upper side arm 34 of the pedal arm 30, to be described below, passes, a resting stopper 16 for stopping the pedal arm 30 in the resting position, a fully open stopper 17 for stopping the pedal arm 30 in a fully open position (a maximum depression position), a flange portion 18 for fixing the housing to the vehicle body M or the like, an engaging portion 19a, a latch pawl 19b and a screw hole 19c for engaging the housing cover 20, and so on.

As shown in Figs. 5 and 6, the convex fitting portion 11 is formed in a columnar shape centering on the oscillation axis L of the pedal arm 30 such that an outer peripheral surface 11a thereof is fitted into an inner peripheral surface 31a of the cylindrical portion 31 (of the pedal arm 30) so as to be free to slide about the oscillation axis L.
As shown in Figs. 5 and 6, the thrust receiving portion 12 is formed as an annular flat surface and positions the cylindrical portion 31 in a thrust direction (the direction of the oscillation axis L) by contacting an end surface 31b of the cylindrical portion 31.
As shown in Figs. 3 through 5, the recessed portion 13 is formed to accommodate the return spring 40 such that the return spring 40 is compressed to a predetermined compression margin, and defines a seat portion 13a that holds the return spring 40 by contacting one end 41 of the return spring 40. In cooperation with a seat portion 37 of the pedal arm 30, to be described below, the seat portion 13a holds the return spring 40 in a state of compression to the predetermined compression margin so as to be free to expand and contract.

As shown in Figs. 3 through 7, the recessed portion 14 is formed to accommodate the hysteresis generating mechanism 50 (the first slider 51, second slider 52, and return spring 53), and defines the lower portion guide surface 14a, which guides a lower surface 51a serving as a sliding surface of the first slider 51 slidingly, an upper portion guide surface 14b for guiding an upper surface 52a of the second slider 52 slidingly, a side portion guide surface 14c for guiding left side surfaces 51b, 52b of the first slider 51 and second slider 52 slidingly, a seat portion 14d for holding the return spring 53 by contacting one end 53a of the return spring 53, and so on.
Here, the lower portion guide surface 14a constitutes a guide surface of the kickdown mechanism.

As shown in Figs. 3, 4, 6 and 7, the notch portion 15 is formed to allow the upper side arm 34 of the pedal arm 30 to pass through as it oscillates, and to receive a convex portion 51f of the first slider 51, to be described below. Further, the notch portion 15 defines an edge portion 15a formed as a wall surface that stands erect in a boundary region with the lower portion guide surface 14a.
More specifically, the notch portion 15 is shaped to allow the pedal arm 30 to pass through as it oscillates, and to receive the convex portion 51f of the first slider 51, which doubles as the slider of the kickdown mechanism, such that the convex portion 51f is not lifted onto the lower portion guide surface 51a when the accelerator pedal 30a (pedal arm 30) is within an oscillation range extending from the resting position to a position immediately prior to generation of the kickdown load.
By providing the notch portion 15 with both a function for allowing the pedal arm 30 to oscillate and a function for receiving the convex portion 51f of the first slider 51 in this manner, component consolidation can be achieved, enabling structural simplification, a reduction in the size of the device, and so on.

The housing cover 20 is formed entirely from a resin material, and as shown in Figs. 1, 2, 5 and 8, comprises a recessed fitting portion 21 that is fitted (externally fitted) onto a cylindrical portion 32 of the pedal arm 30, to be described below, so as to be free to slide, a thrust receiving portion 21b that supports the cylindrical portion 32 in the direction of the oscillation axis L, a projecting portion 23 formed inside and coaxially with the recessed fitting portion 21, a side portion guide surface 24 that guides right side surfaces 51c, 52c of the first slider 51 and second slider 52 of the hysteresis generating mechanism 50 slidingly, a restricting projection 25 for restricting sideward deviation of the return spring 40, a restricting projection 26 for restricting sideward deviation of the return spring 53, a connector 27 for connecting wiring of the position sensor 60, to be described below, an engaging portion 29a, a latch piece 29b, and a through hole 29c through which a screw B (see Fig. 1) is passed, for engaging the housing cover 20 with the housing main body 10, and so on.

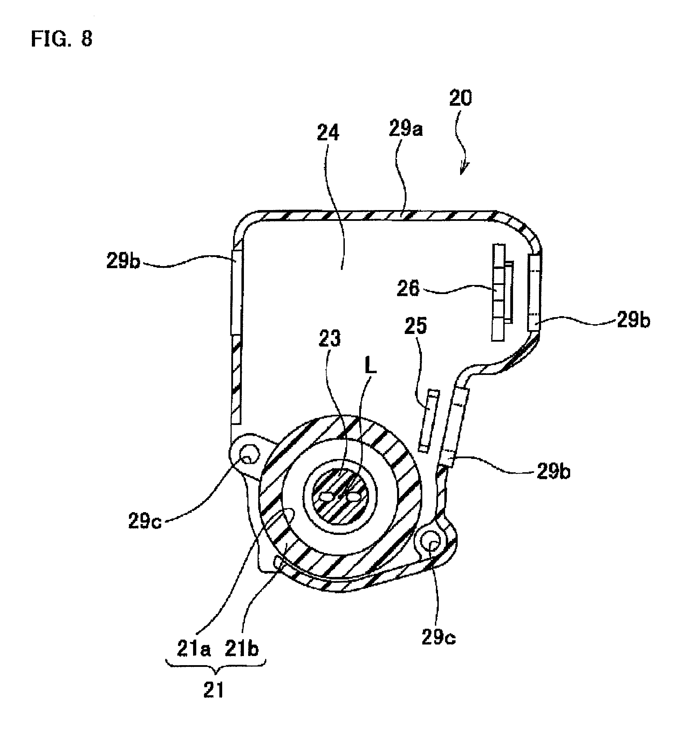

As shown in Figs. 5 and 8, the recessed fitting portion 21 is formed in a cylindrical shape centering on the oscillation axis L of the pedal arm 30 such that an inner peripheral surface 21a thereof is fitted onto an outer peripheral surface 32a of the cylindrical portion 32 (of the pedal arm 30) so as to be free to slide about the oscillation axis L.
Further, as shown in Figs. 5 and 8, the recessed fitting portion 21 is formed such that an end surface thereof, which is formed as an annular flat surface, defines the thrust receiving portion 21b for positioning the cylindrical portion 32 (in the direction of the oscillation axis L) by contacting an annular end surface 32b surrounding the base of the cylindrical portion 32.
As shown in Figs. 5 and 8, the projecting portion 23 is formed in a columnar shape centering on the oscillation axis L of the pedal arm 30, and a part (stators 63, 64 and a Hall element 65, to be described below) of the position sensor 60 is buried in the interior thereof. The projecting portion 23 is disposed so as not to contact an inside region of the cylindrical portion 32 of the pedal arm 30, to be described below.

The pedal arm 30 is formed entirely from a resin material, and as shown in Figs. 1 through 5, comprises the cylindrical portions 31, 32, which are formed in a cylindrical shape centering on the oscillation axis L when incorporated into the housing (10, 20), a lower side arm 33 that extends downward from the cylindrical portions 31, 32 to define the accelerator pedal 30a, the upper side arm 34, which extends upward from the cylindrical portions 31, 32, a contact portion 35 that contacts the resting stopper 16 of the housing 10 detachably at the tip end of the upper side arm 34, an engaging portion 36 that is formed on an opposite side to the contact portion 35 at the tip end of the upper side arm 34 and engages detachably with the first slider 51 of the hysteresis generating mechanism 50, a seat portion 37 that is formed near the upper side (further toward the upper side than the oscillation axis L) of the cylindrical portions 31, 32 and holds the return spring 40 by contacting another end 42 of the return spring 40, a contact portion 38 that contacts the fully open stopper 17 of the housing main body 10 detachably at the lower side arm 33, and so on.

As shown in Fig. 5, the cylindrical portion 31 is formed such that an inner peripheral surface 31a thereof is fitted (externally fitted) onto (the outer peripheral surface 11a of) the convex fitting portion 11 of the housing main body 10 so as to be free to slide about the oscillation axis L.
As shown in Fig. 5, the cylindrical portion 32 is formed such that an outer peripheral surface 32a thereof is fitted (internally fitted) into (the inner peripheral surface 32a of) the recessed fitting portion 21 of the housing cover 20 so as to be free to slide about the oscillation axis L. Further, a part (an armature 61 and a magnet 62, to be described below) of the position sensor 60 is attached fixedly to an inner peripheral surface 32c of the cylindrical portion 32.

As shown in Figs. 3 through 5, the return spring 40 is a compression-type coil spring formed from spring steel or the like, which is held in a state of compression to a predetermined compression margin by having one end 41 thereof contact the seat portion 13a of the housing main body 10 and the other end 42 thereof contact the seat portion 37 of the pedal arm 30. Thus, the return spring 40 is fitted into the recessed portion 13 of the housing 10 so as to generate a biasing force for returning the pedal arm 30 to the resting position. In a region above the oscillation axis L, the return spring 40 applies a biasing force to the upper side arm 34 of the pedal arm 30 in an identical orientation to the return spring 53 of the hysteresis generating mechanism 50.

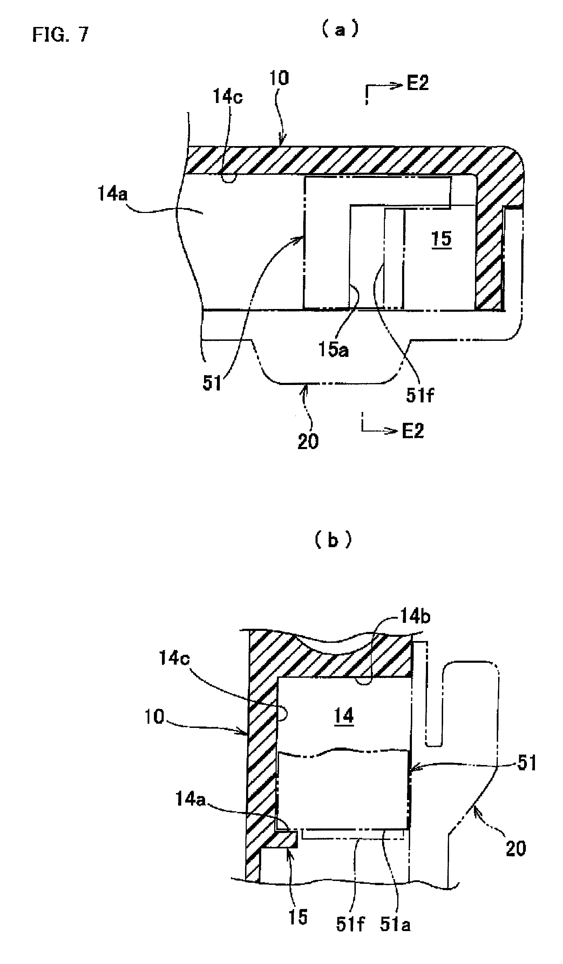

As shown in Figs. 3 through 5, 7, 9 and 10, the hysteresis generating mechanism 50 is accommodated in the recessed portion 14 of the housing main body 10, and is formed from the first slider 51, the second slider 52, and the return spring 53 serving as a biasing spring.
The first slider 51 is formed from a resin material (for example, a highly slidable material such as oil-containing polyacetal), and as shown in Figs. 7 and 9 (a) to 9 (e), comprises the lower surface 51a serving as a sliding surface that slides in contact with the lower portion guide surface 14a of the housing main body 10, the left side surface 51b that slides in contact with the side portion guide surface 14c of the housing main body 10, the right side surface 51c that slides in contact with the side portion guide surface 24 of the housing cover 20, an inclined surface 51d that contacts an inclined surface 52d of the second slider 52, to be described below, an engaging portion 51e that engages detachably with the engaging portion 36 of the pedal arm 30, a convex portion 51f that projects from the lower surface 51a (sliding surface) in a block shape substantially forming a rectangular parallelepiped, and so on.

The lower surface 51a is formed to be flat so as to slide in close contact with the lower portion guide surface 51a when the pedal arm 30 oscillates between the resting position and an angular position slightly back from the maximum depression position (within the normal movement range), or in other words within an oscillation range extending to a point immediately prior to generation of the kickdown load.
When the first slider 51 that moves in conjunction with (the engaging portion 36 of) the pedal arm 30 is within the normal movement range (i.e. when the pedal arm 30 oscillates between the resting position and an angular position slightly back from the maximum depression position), or in other words a movement region extending to a point immediately prior to generation of the kickdown load, the convex portion 51f enters the notch portion 15, and when the first slider 51 exceeds a predetermined movement range, or in other words when the kickdown load is generated, the convex portion 51f contacts the edge portion 15a and is then lifted onto and slides over the lower portion guide surface 14a.

The second slider 52 is formed from a resin material (for example, a highly slidable material such as oil-containing polyacetal), and as shown in Figs. 10(a) to 10(e), comprises the upper surface 52a that slides in contact with the upper portion guide 14b of the housing main body 10, the left side surface 52b that slides in contact with the side portion guide surface 14c of the housing main body 10, the right side surface 52c that slides in contact with the side portion guide surface 24 of the housing cover 20, an inclined surface 52d that contacts the inclined surface 51d of the first slider 51, an annular seat portion 52e that holds the return spring 53 by contacting another end 53b of the return spring 53, and so on.

As shown in Figs. 3 and 4, the return spring 53 is a compression-type coil spring formed from spring steel or the like, which is fitted in a state of compression to a predetermined compression margin by having one end 53a thereof contact the seat portion 14d of the housing main body 10 and the other end 53b thereof contact the seat portion 52e of the second slider 52. Thus, the return spring 53 pushes the inclined surface 52d of the second slider 52 against the inclined surface 51d of the first slider 51, thereby applying a wedge action such that the lower surface 51a of the first slider 51 is pushed against the lower portion guide surface 14a and the upper surface 52a of the second slider 52 is pushed against the upper portion guide surface 14b. Moreover, the return spring 53 generates a biasing force for returning the pedal arm 30 to the resting position via the engaging portion 36.
By means of the return spring 53, the first slider 51 and second slider 52 are biased toward the right side of Fig. 4 within the recessed portion 14 and held from both sides by the side portion guide surface 14c of the housing main body 10 and the side portion guide surface 24 of the housing cover 20 so as to be free to slide. Thus, movement of the first slider 51 and second slider 52 in a parallel direction to the oscillation axis L is restricted.

In the constitution described above, the first slider 51 of the hysteresis generating mechanism 50 comprises the sliding surface (lower surface 51a) that slides over the lower portion guide surface 14a of the housing main body 10, and the convex portion 51f that is separated from the lower portion guide surface 14a up to a point immediately prior to generation of the kickdown load and lifted onto the lower portion guide surface 14a when the kickdown load is generated, and therefore the first slider 51 functions as the slider of the kickdown mechanism.
In other words, the first slider 51, of the hysteresis generating mechanism 50, the lower portion guide surface 14a of the housing (the housing main body 10), and the convex portion 51f of the first slider 51 together constitute a kickdown mechanism for generating a kickdown load that increases the pedal force rapidly when the accelerator pedal 30a is depressed to the fully open side.

As regards the actions of the hysteresis generating mechanism 50 and the kickdown mechanism described above, when the pedal arm 30 is depressed toward the maximum depression position (a fully open position Smax) against the biasing force of the return springs 40, 53, the engaging portion 36 pushes the first slider 51 leftward in Fig. 4 against the biasing force of the return spring 53, and by means of the wedge action of the inclined surfaces 51b, 52d, the lower surface 51a and upper surface 52a move while being pushed against the lower portion guide surface 14a and the upper portion guide surface 14b, respectively. As a result, a frictional force (pedal force) that increases linearly as the biasing force of the return spring 53 increases is generated, as shown in Fig. 12.

When the convex portion 51f of the first slider 51 moves into the notch portion 15 and comes into contact with the edge portion 15a thereof so as to be lifted onto the lower portion guide surface 14a, as shown in Fig. 11 (a), a kickdown load (click load) is generated, as shown in Fig. 12, as a result of which the pedal force increases rapidly. Then, when the convex portion 51f slides over the lower portion guide surface 14a, as shown in Fig. 11(b), the pedal force decreases to a pedal force corresponding to the immediately preceding hysteresis characteristic, after which the maximum depression position is reached.

On the other hand, when the pedal arm 30 returns toward the resting position in accordance with the biasing force of the return springs 40, 53, the wedge action of the inclined surfaces 51b, 52d causes the force for pushing the lower surface 51a and convex portion 51f and the upper surface 52a against the lower portion guide surface 14a and the upper portion guide surface 14b, respectively, weakens gradually, and as a result of the biasing force of the return spring 53, the first slider 51 and second slider 52 move toward their original positions. As a result, the convex portion 51f separates from the lower portion guide surface 14a and enters the notch portion 15, whereupon a frictional force that decreases linearly in accordance with the reduction in the biasing force of the return spring 53 is generated, as shown in Fig. 12. The frictional force during this return operation decreases below the frictional force generated during the depression operation, and therefore hysteresis can be generated in the entire pedal force (pedal load) from the depression operation to the return operation. Furthermore, with the kickdown mechanism (51, 51f, 14a, and so on) described above, a characteristic according to which the kickdown load alone is superimposed with substantially no effect on the hysteresis characteristic of the hysteresis generating mechanism 50 can be obtained.

Since the first slider 51 defines the lower surface 51a serving as a sliding surface and the convex portion 51f, and the housing (housing main body 10) defines the lower portion guide surface 14a and the notch portion 15, the kickdown mechanism can be structured simply. Furthermore, the first slider 51 can be caused to slide in a predetermined direction such that the kickdown load is generated at a desired timing (when the convex portion 51f comes into contact with the edge portion 15a of the notch portion 15 and is lifted onto the lower portion guide surface 14a).
In other words, at the timing when the convex portion 51f of the first slider 51 comes into contact with the edge portion 15a of the notch portion 15 and is lifted onto the lower portion guide surface 14a, a kickdown load that increases rapidly relative to the pedal force can be generated, and as a result, a clicking sensation can be clearly felt, enabling the operator to recognize the kickdown operation reliably.
Further, by modifying the position of the edge portion 15a, the generation timing (generation point) of the kickdown load can be adjusted appropriately in accordance with the individual requirements of the vehicle model in which the device is installed. Moreover, by modifying the shape, projection position, size (projection amount), and so on of the convex portion 51f, the magnitude of the kickdown load can be adjusted appropriately according to requirements.

The position sensor 60 is a non-contact type magnetic sensor, and as shown in Figs. 4 and 5, is formed from an annular armature 61 constituted by a magnetic material and provided on the inner peripheral surface 32c of the cylindrical portion 32 of the pedal arm 30, a pair of arc-shaped permanent magnets 62 joined to an inner peripheral surface of the armature 61, stators 63, 64 constituted by a magnetic material and buried in the projecting portion 23 of the housing cover 20, two Hall elements 65 disposed between the stators 63, 64, a terminal 66 that is exposed to the interior of the connector 27, a circuit board 67 buried in the housing cover 20, on which various electronic components are packaged, and so on.

Next, an operation of the accelerator pedal device will be described.
First, in the resting position, i.e. when the operator (driver) has not depressed the accelerator pedal 30a, the contact portion 35 contacts the resting stopper 16 due to the biasing force of the return springs 40, 53 such that the pedal arm 30 is halted in the position shown by the solid line in Fig. 1. At this time, the engaging portion 36 of the pedal arm 30 is engaged detachably to the engaging portion 51e of the first slider 51.
Further, the lower surface 51a of the first slider 51 is in close contact with the lower portion guide surface 14a such that the convex portion 51f is inserted into the notch portion 15.

When the operator (driver) depresses the accelerator pedal 30a from this state, the pedal arm 30 rotates in the counter-clockwise direction of Fig. 4 against the biasing force of the return springs 40, 53, and, as shown in Fig. 12, when the pedal arm 30 reaches a position immediately before the maximum depression position (the fully open position Smax), indicated by the dot-dot-dash line in Fig. 1, while increasing the resistance load (push-back load) generated by the hysteresis generating mechanism 50, the convex portion 51f of the first slider 51 comes into contact with the edge portion 15a and is lifted onto the lower portion guide surface 14a, as shown in Fig. 11 (a) . At this time, a kickdown load (click load) serving as resistance is applied, whereby the pedal force increases rapidly. As a result, the operator (driver) can clearly recognize (sense) the kickdown operation.

When the operator (driver) depresses the accelerator pedal 30a further, the convex portion 51f of the first slider 51 slides over the lower portion guide surface 14a so as to tilt the first slider 51 slightly, as shown in Fig. 11 (b), whereby the contact portion 38 comes into contact with the fully open stopper 17 of the housing main body 10 and stops when it reaches the maximum depression position (fully open position Smax). As shown in Fig. 12, once the kickdown load has been generated, the pedal force varies (increases) linearly in accordance with the original hysteresis characteristic.

On the other hand, when the operator (driver) reduces the pedal force, the pedal arm 30 is moved toward the resting position by the biasing force of the return springs 40, 53 while applying a smaller resistance load (pedal load) to the operator (driver) than the resistance load (pedal load) during depression, and as a result, the contact portion 35 of the pedal arm 30 comes into direct contact with the resting stopper 16 of the housing main body 10 and stops.
By having the first slider 51 of the hysteresis generating mechanism 50 double as the slider of the kickdown mechanism in this manner, the pedal force can be provided with a desired hysteresis characteristic, and the kickdown load can be generated clearly.

According to the device described above, the first slider 51 included in the hysteresis generating mechanism 50 doubles as the slider of the kickdown mechanism, and therefore the need to provide a dedicated component for the kickdown mechanism can be eliminated, enabling structural simplification and reductions in the number of components and costs. Moreover, the kickdown mechanism can be provided without varying the outward appearance of the housing (housing main body 10, housing cover 20) or modifying the pedal arm 30, and since the pedal arm 30 is not subject to restrictions such as those occurring when a conventional kickdown mechanism is provided, the pedal arm 30 can be designed freely.

In the embodiment described above, a case in which the first slider 51 of the hysteresis generating mechanism 50 doubles as the slider of the kickdown mechanism was illustrated, but when the hysteresis generating mechanism is not provided, a dedicated slider may be provided.
In the embodiment described above, a slider (the first slider 51) having a flat sliding surface and the lower portion guide surface 14a of the housing main body 10 are employed as the kickdown mechanism, but the present invention is not limited thereto, and as long as the housing is provided with a guide surface along which a slider can slide, the surfaces need not be flat, and may be curved instead.
In the embodiment described above, a guide surface (the lower portion guide surface 14a) provided in the housing (housing main body 10) and the first slider 51 having the convex portion 51f are employed as the kickdown mechanism, but the present invention is not limited thereto, and a convex portion may be provided on the guide surface of the housing rather than the slider.

In the embodiment described above, the notch portion 15 that permits free oscillatory passage of the pedal arm 30 doubles as the notch portion into which the convex portion 51f of the first slider 51 enters, but the present invention is not limited thereto, and a separate notch portion may be provided.
In the embodiment described above, a case in which the notch portion 15 is provided in the housing (housing main body 10) as the component that receives the convex portion 51f of the first slider 51 up to the point immediately prior to generation of the kickdown load was illustrated, but the present invention is not limited thereto, and a recessed portion may be provided in the housing.
In the embodiment described above, a case in which the slider and guide surface constituting the kickdown mechanism are formed from a resin material was illustrated, but the present invention is not limited thereto, and a metallic material exhibiting even greater corrosion resistance and shock resistance may be used.

### [Industrial Applicability]

As described above, the accelerator pedal device of the present invention is capable of generating a clearly recognizable kickdown load (click load) when the accelerator pedal (pedal arm) is depressed to the fully open side, while achieving structural simplification, reductions in the number of components, the number of assembly steps, cost, and so on, and also an increase in design freedom. Hence, the accelerator pedal device of the present invention may of course be applied to an automobile or the like, but is not limited thereto, and may be used in any vehicle that requires an accelerator operation.

### [Brief Description of the Drawings]

Fig. 1 is a side view showing an embodiment of an accelerator pedal device according to the present invention.
Fig. 2 is a front view showing an embodiment of the accelerator pedal device according to the present invention.
Fig. 3 is a perspective view showing the internal structure of the accelerator pedal device.
Fig. 4 is a side view showing the internal structure of the accelerator pedal device.
Fig. 5 is a sectional view showing the internal structure of the accelerator pedal device.
Fig. 6 is a side view showing the interior of a housing main body forming a part of the accelerator pedal device.
Fig. 7 shows a part of the housing main body shown in Fig. 6, (a) being a partial sectional view along E1-E1 in (a), and (b) being a partial sectional view along E2-E2 in Fig. 6.
Fig. 8 is a side view showing the interior of a housing cover forming a part of the accelerator pedal device.
Fig. 9 shows a first slider forming a part of a hysteresis generating mechanism included in the accelerator pedal device, (a) being a plan view, (b) being a right side view, (c) being a bottom view, (d) being a back view, and (e) being a front view.
Fig. 10 shows a second slider forming a part of the hysteresis generating mechanism included in the accelerator pedal device, (a) being a plan view, (b) being a right side view, (c) being a bottom view, (d) being a back view, and (e) being a front view.
Fig. 11 illustrates an operation of a kickdown mechanism included in the accelerator pedal device, (a) being a partial side view showing a state in which a convex portion contacts an edge portion, and (b) being a partial side view showing a state in which the convex portion is lifted onto a lower portion guide surface.
Fig. 12 is a pedal force characteristic diagram showing a hysteresis characteristic of a pedal force on which a kickdown load is superimposed in the accelerator pedal device according to the present invention.

### [Description of Reference Symbols]

L oscillation axis
10 housing main body (housing)
11 convex fitting portion
14 recessed portion
14a lower portion guide surface (guide surface of kickdown mechanism)
15 notch portion
15a edge portion
16 resting stopper
17 fully open stopper
20 housing cover (housing)
30 pedal arm
30a accelerator pedal
31, 32 cylindrical portion
34 upper side arm
35 contact portion
36 engaging portion
38 contact portion
40 return spring
50 hysteresis generating mechanism
51 first slider (slider of kickdown mechanism)
51a lower surface (sliding surface)
51f convex portion
52 second slider
52e engaging portion
53 return spring (biasing spring)
60 position sensor

## Claims

1. An accelerator pedal device comprising a pedal arm having an accelerator pedal, a housing for supporting said pedal arm to be free to oscillate about a predetermined oscillation axis, a return spring for returning said pedal arm to a resting position, and a kickdown mechanism for generating a kickdown load that increases a pedal force of said accelerator pedal,
**characterized in that** said kickdown mechanism includes a slider that moves in conjunction with said pedal arm, and a guide surface that is formed in said housing to guide said slider slidably, and
said slider comprises a convex portion that is separated from said guide surface up to a point immediately prior to generation of said kickdown load and lifted onto said guide surface when said kickdown load is generated.

2. An accelerator pedal device comprising a pedal arm having an accelerator pedal, a housing for supporting said pedal arm to be free to oscillate about a predetermined oscillation axis, a return spring for returning said pedal arm to a resting position, and a kickdown mechanism for generating a kickdown load that increases a pedal force of said accelerator pedal,
**characterized in that** said kickdown mechanism includes a slider that moves in conjunction with said pedal arm, and a guide surface that is formed in said housing to guide said slider slidably, and
said guide surface comprises a convex portion that is separated from said slider up to a point immediately prior to generation of said kickdown load and contacted by said slider such that said slider is lifted thereon when said kickdown load is generated.

3. The accelerator pedal device according to claim 1 or 2, further comprising a hysteresis generating mechanism for generating hysteresis in said pedal force of said accelerator pedal, having a slider that slides over said guide surface of said housing in conj unction with said pedal arm so as to generate a frictional force, and a biasing spring for biasing said slider toward said resting position,
**characterized in that** said slider of said hysteresis generating mechanism doubles as said slider of said kickdown mechanism.

4. The accelerator pedal device according to claim 3, **characterized in that** said biasing spring doubles as said return spring.

5. The accelerator pedal device according to any of claims 1, 3 and 4, **characterized in that** said slider comprises a sliding surface that slides over said guide surface, and said convex portion, which is formed so as to project from said sliding surface, and
said housing comprises a recessed portion or a notch portion that is formed adjacent to said guide surface and receives said convex portion up to said point immediately prior to generation of said kickdown load.

6. The accelerator pedal device according to any of claims 1, 3, 4 and 5, **characterized in that** said pedal arm comprises an arm that extends on an opposite side of said oscillation axis to said accelerator pedal, and an engaging portion that is provided on a tip end of said arm and engages with said slider,
said housing comprises a notch portion that allows said arm to pass therethrough as said arm oscillates, and
said notch portion is formed to receive said convex portion of said slider up to said point immediately prior to generation of said kickdown load.

7. The accelerator pedal device according to claim 6, **characterized in that** said notch portion defines an edge portion formed such that when said kickdown load is generated, said convex portion comes into contact therewith and is lifted onto said guide surface.

8. The accelerator pedal device according to any of claims 1 through 7, **characterized in that** said housing and said slider are respectively formed from a resin material.
